# EUROPEAN PATENT APPLICATION

(11) **EP 4 425 626 A1**
(43) Date of publication of application: **04.09.2024**
(21) Application number: 23829666.9
(22) Date of filing: 26.04.2023
(51) Int. Cl.: H01M 10/04, H01M 10/0587

(54) **DEVICE AND METHOD FOR PREPARING ELECTRODE ASSEMBLY**

(30) Priority: 27.06.2022 CN 202210736337
(71) Applicant: Jiangsu Contemporary Amperex Technology Limited, Liyang, Jiangsu 213300 (CN)
(72) Inventor: FENG, Baoming, hangzhou, Jiangsu 213300 (CN); ZHANG, Qi, hangzhou, Jiangsu 213300 (CN); XIE, Yuanyuan, hangzhou, Jiangsu 213300 (CN); CHENG, Peng, hangzhou, Jiangsu 213300 (CN); TANG, Yunlu, hangzhou, Jiangsu 213300 (CN); GENG, Jie, hangzhou, Jiangsu 213300 (CN)
(74) Representative: Rowlands, Stuart Michael
(86) International application number: PCT/CN2023/090888
(87) International publication number: WO 2024/001479

(57) **Abstract**

The present application provides a device and method for preparing an electrode assembly. The device comprises: a heating device used for heating a separator to be wound; and a winding device used for winding an anode sheet, a cathode sheet, and the heated separator to form an electrode assembly. By means of the device, separators can be effectively heated, and the quality of electrode assemblies can be improved.

## Description

### Cross-Reference to Related Applications

The present application claims the priority of Chinese Patent Application No. 202210736337.3, entitled "APPARATUS AND METHOD FOR PREPARING ELECTRODE ASSEMBLY" and filed on June 27, 2022, the entire content of which is incorporated herein by reference.

### Technical Field

The present application relates to the technical field of batteries, and more particularly to, an apparatus and a method for preparing an electrode assembly.

### Background Art

Energy conservation and emission reduction are key to the sustainable development of the automobile industry. Electric vehicles have become an important part of the sustainable development of the automobile industry due to their advantages in energy conservation and environmental protection. For electric vehicles, battery technology is an important factor to their development.

Generally, a battery consists of a battery cell; the battery cell is composed of an electrode assembly and an electrolyte; the electrode assembly is formed by winding an anode plate, a cathode plate, and a separator; the separator is configured to isolate the anode plate from the cathode plate; and the operation of the battery cell mainly relies on the movement of metal ions between the anode plate and the cathode plate. In order to enable the electrode assembly to be better shaped in a compressing process, and to reduce the problems of the electrode assembly having an inner ring opening and the wrinkling of the separator and the like, the separator needs to be heated to improve its bonding performance with the anode plate and the cathode plate. How to heat the separator becomes a problem to be solved.

### Summary of the Invention

The present application provides an apparatus and a method for preparing an electrode assembly, which can realize effective heating of a separator and improve the quality of the electrode assembly.

In a first aspect, an apparatus for preparing an electrode assembly is provided, including: a heating apparatus configured to heat a separator configured to be wound; and a winding apparatus configured to wind an anode plate, a cathode plate and the heated separator to form an electrode assembly.

In an embodiment of the present application, heating the separator in the process of winding the separator, the anode plate and the cathode plate to form the electrode assembly is performed, instead of heating the electrode assembly after winding to form the electrode assembly, so that not only an outer separator of the electrode assembly, but also an inner separator thereof can be heated, thus giving full play to the bonding performance between the inner separator and the anode plate and the cathode plate, allowing the electrode assembly to be better shaped during the compressing process, reducing the problems of forming the inner ring opening and the wrinkling of the separator, and improving the quality of the electrode assembly.

In an implementation, the heating apparatus is located on at least one side of the separator to heat a surface of the at least one side of the separator.

In the process of heating the separator configured to be wound, the heating apparatus may be provided on a side of the separator close to the anode plate or the cathode plate, to heat a surface of the side of the separator close to the anode plate or a surface of the side of the separator close to the cathode plate, so that the number of heating apparatuses is reduced and the cost is lowered; alternatively, the heating apparatuses may be provided on both sides of the separator to simultaneously heat surfaces of both sides of the separator, thereby improving the heating efficiency.

In an implementation, the separator includes a first separator and/or a second separator, the first separator is located between the anode plate and the cathode plate, the second separator and the first separator are located on two sides of the anode plate respectively, and the first separator and the second separator are configured to isolate the anode plate from the cathode plate in the electrode assembly.

In this embodiment, only the first separator may be heated using the heating method described above, that is, the first separator configured to be wound is heated, and then the heated first separator, the anode plate, the cathode plate, and the second separator are wound to form the electrode assembly; after that, the second separator may be heated using other heating methods, such as heating the second separator by means of a heated compressing plate during the compressing process of the electrode assembly, so that the number of heating apparatuses is reduced and the cost is lowered; alternatively, the first separator and the second separator may be heated simultaneously using the heating methods described above, that is, the first separator and the second separator configured to be wound are heated, and then the heated first separator and the second separator, together with the anode plate and the cathode plate, are wound to form the electrode assembly, thereby simplifying the operation and improving the preparation efficiency of the electrode assembly.

In an implementation, the heating apparatus includes a transmitter, the transmitter is configured to transmit electromagnetic waves to irradiate a surface of the separator to be heated, and the transmitter has the advantages such as high heat production efficiency, low heat loss, and energy conservation. For example, the electromagnetic waves may refer to infrared waves.

In an implementation, the heating apparatus further includes a monitoring module, and the monitoring module is configured to monitor transmit power of the electromagnetic waves, thereby reducing the influence of power fluctuation on the heating process and improving the heating effect to the separator.

In an implementation, the monitoring module is further configured to control the transmitter to stop transmitting the electromagnetic waves when monitoring that the transmit power exceeds a threshold value, thereby reducing damage to the separator caused by excessive temperature.

In an implementation, the monitoring module is further configured to control the winding apparatus to stop winding the anode plate, the cathode plate, and the separator when monitoring that the power exceeds a threshold value, thereby reducing the situation of winding the separator damaged by high temperature when the transmit power is too high, and improving the quality of the electrode assembly.

In an implementation, the winding apparatus includes a winding shaft, and the winding shaft is configured to wind the anode plate, the cathode plate, and the separator, and is easy to implement and operate.

In a second aspect, a method for preparing an electrode assembly is provided, including: heating a separator configured to be wound; and winding an anode plate, a cathode plate, and the heated separator to form an electrode assembly.

In an implementation, heating a separator configured to be wound includes: heating a surface of at least one side of the separator.

In an implementation, the separator includes a first separator and/or a second separator, the first separator is located between the anode plate and the cathode plate, the second separator and the first separator are located on two sides of the anode plate respectively, and the first separator and the second separator are configured to isolate the anode plate from the cathode plate in the electrode assembly.

In an implementation, heating a separator configured to be wound includes: transmitting electromagnetic waves to irradiate a surface of the separator to be heated.

In an implementation, the electromagnetic waves refer to infrared waves.

In an implementation, the method further includes: monitoring transmit power of the electromagnetic waves.

In an implementation, the method further includes: stopping transmitting the electromagnetic waves when the transmit power exceeds a threshold value.

In an implementation, the method further includes: stopping winding the anode plate, the cathode plate, and the separator when the transmit power exceeds a threshold value.

### Brief Description of the Drawings

To more clearly illustrate the technical solutions of the embodiments of the present application, the drawings to be used in the description of the embodiments of the present application will be described briefly below. It will be apparent that the drawings in the following description are merely some embodiments of the present application. For those skilled in the art, other drawings can also be obtained according to these drawings without any creative effort.
FIG. 1 is a schematic diagram of an electrode assembly.
FIG. 2 shows schematic diagrams of an electrode assembly having an opening and an electrode assembly that is closed.
FIG. 3 is a schematic block diagram of an apparatus for preparing an electrode assembly according to an embodiment of the present application.
FIG. 4 is a schematic diagram of a possible implementation of the apparatus shown in FIG. 3.
FIG. 5 is a schematic diagram of a heating apparatus heating a separator.
FIG. 6 is a schematic flowchart of transmit power detection according to an embodiment of the present application.
FIG. 7 is a schematic flowchart of a method for preparing an electrode assembly according to an embodiment of the present application.

In the accompanying drawings, the figures are not drawn to scale.

### Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. It will be apparent that the embodiments described are some of, rather than all of, the embodiments of the present application. All other embodiments obtained by those of ordinary skill in the art based on the embodiments of the present application without creative efforts shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship. The term "perpendicular" does not mean being perpendicular in the strict sense, but within an allowable range of tolerance. The term "parallel" does not mean being parallel in the strict sense, but within an allowable range of tolerance.

The phrase "embodiment" mentioned in the present application means that the specific features, structures and characteristics described with reference to the embodiment may be encompassed in at least one embodiment of the present application. The phrase at various locations in the description does not necessarily refer to the same embodiment, or an independent or alternative embodiment exclusive of another embodiment. Those skilled in the art should understand explicitly and implicitly that the embodiments described in the present application may be combined with other embodiments.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or can be directly connected, or indirectly connected by means of an intermediate medium, or communication between interiors of two elements. For those of ordinary skill in the art, the specific meaning of the terms mentioned above in the present application should be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

"A plurality of" appearing in the present application means two or more, and similarly, "a plurality of groups" means two or more groups, and "a plurality of pieces" means two or more pieces.

In the environment of automobile industry using traditional energy as a power supply, the problem of environmental pollution is increasingly serious. Therefore, the active development of new energy vehicles can reduce the harm to the environment. For the new energy vehicles, the battery technology is an important factor to their development.

A battery mentioned in the present application refers to a single physical module including one or more battery cells to provide a higher voltage and capacity. For example, the battery mentioned in the present application may include a battery module, a battery pack, etc. The battery generally includes a case for enclosing one or more battery cells. The case can prevent liquid or other foreign matters from affecting charging or discharging of a battery cell.

In an implementation, the battery cell may include a lithium-ion battery, a lithium-sulfur battery, a sodium/lithium-ion battery, a sodium-ion battery or a magnesium-ion battery, etc., which will not be limited in the embodiments of the present application. Generally, the battery cell is also referred to as a cell. The battery cell may be cylindrical, flat, rectangular, or in other regular or irregular shapes. The technical solutions of the embodiments of the present application may be applied to battery cells in any shapes.

The battery cell includes an electrode assembly and an electrolyte. The electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer. A surface of the positive electrode current collector is coated with the positive electrode active material layer, the current collector not coated with the positive electrode active material layer protrudes from the current collector coated with the positive electrode active material layer, and the current collector not coated with the positive electrode active material layer serves as a positive tab. Taking a lithium-ion battery as an example, the positive electrode current collector may be made from aluminum, and the positive electrode active material may be lithium cobalt oxide, lithium iron phosphate, ternary lithium or lithium manganate, etc. The negative electrode plate includes a negative electrode current collector and a negative electrode active material layer. A surface of the negative electrode current collector is coated with the negative electrode active material layer, the current collector not coated with the negative electrode active material layer protrudes from the current collector coated with the negative electrode active material layer, and the current collector not coated with the negative electrode active material layer serves as a negative tab. The negative electrode current collector may be made of copper, and the negative electrode active material may be carbon, silicon, etc. In order to ensure that no fusing occurs when a large current passes, there are multiple positive tabs stacked together, and there are multiple negative tabs stacked together.

In embodiments of the present application, the electrode assembly is also referred to as a bare cell; the above-mentioned positive electrode plate is also referred to as a cathode plate; the above-mentioned negative electrode plate is also referred to as an anode plate; and the above-mentioned separator is also referred to as a separator. The separator may be made of, for example, polypropylene (PP) or polyethylene (PE), or the like. The main bonding component of the separator is an adhesive material coated on the surface of the separator, for example, a polymer cement sealant (PCS). When the PCS reaches its softening temperature, its bonding performance can be fully utilized. For this purpose, the surface of the separator in the electrode assembly needs to be heated. Generally, the PCS may include, for example, polyvinylidene fluoride (PVDF).

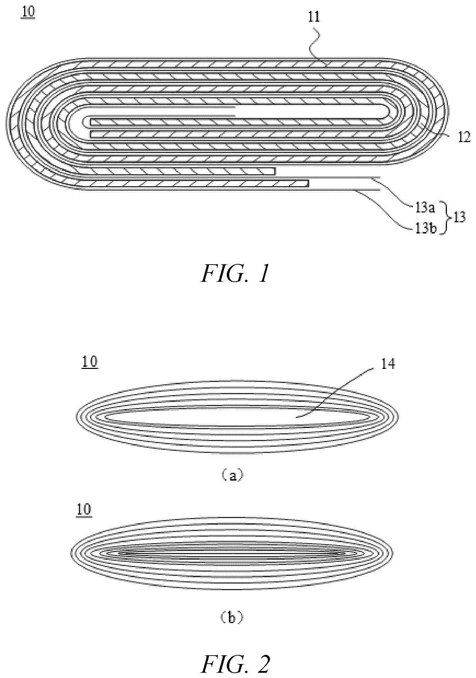

An electrode assembly 10, as shown in FIG. 1, includes an anode plate 11, a cathode plate 12, and a separator 13. The separator 13 includes an inner separator 13a sandwiched between the anode plate 11 and the cathode plate 12, and an outer separator 13b covering the outside of the anode plate. Generally, in the process of compressing the electrode assembly 10 formed by winding, a heated compressing plate is utilized to heat the outer separator 13b of the electrode assembly 10 when the outer separator 13b of the electrode assembly 10 is in contact with the heated compressing plate. For reasons of production capacity and the like, the heating time of this heating method is very limited, only the temperature of the outer separator 13b can be raised while the temperature of the inner separator 13a is almost unchanged, the PCS on the surface of the inner separator 13a is unable to reach its softening temperature, and accordingly, the bonding performance cannot be fully utilized, which results in insufficient adhesion between the inner separator 13a and the anode plate 11 and the cathode plate 12, and makes it not easy to shape the electrode assembly in the compressing process, thereby the electrode assembly 10 has failure problems such as forming an inner ring opening and the wrinkling of the separator, which may further affect the quality of the electrode assembly 10.

(a) and (b) in FIG. 2 are schematic diagrams of the electrode assembly 10 having an opening 14 and the electrode assembly 10 that is closed, respectively. In FIG. 1, the inner separator 13a of the electrode assembly 10 cannot be heated, its bonding performance cannot be fully utilized, and thus the electrode assembly cannot be better shaped, is easy to have an inner ring opening 14, and is prone to problems such as the wrinkling of the separator. In order to obtain the electrode assembly 10 that is closed as shown in FIG. 2, it is necessary to heat the inner separator 13a and the outer separator 13b of the electrode assembly 10 at the same time, to improve the bonding performance of the inner separator 13a with the anode plate 11 and the cathode plate 12, thereby making the electrode assembly 10 easy to be shaped during the compressing process, reducing the problems such as forming the inner ring opening 14 and the wrinkling of the separator, and improving the quality of the electrode assembly 10.

To this end, an embodiment of the present application provides a solution of preparing the electrode assembly 10. In the process of winding the separator 13, the anode plate 11 and the cathode plate 12 to form the electrode assembly 10, the separator 13 to be wound is heated, thereby solving the problem that only the outer separator 13b of the electrode assembly instead of the inner separator 13a thereof can be heated, effectively heating the separator 13, and improving the quality of the electrode assembly 10.

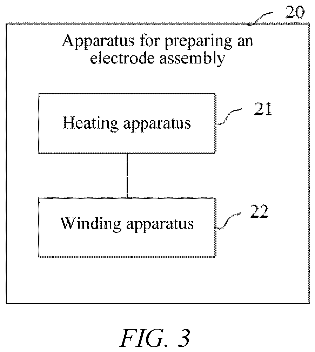

FIG. 3 shows an apparatus for preparing an electrode assembly according to an embodiment of the present application. The apparatus 20 for preparing an electrode assembly includes a heating apparatus 21 and a winding apparatus 22. The heating apparatus 21 is configured to heat a separator 13 to be wound; and the winding apparatus 22 is configured to wind an anode plate 11, a cathode plate 12 and the heated separator 13 to form an electrode assembly 10.

In an embodiment of the present application, heating the separator 13 in the process of winding the separator 13, the anode plate 11 and the cathode plate 12 to form the electrode assembly 10 is performed, instead of heating the electrode assembly 10 after winding to form the electrode assembly 10, so that not only an outer separator 13b of the electrode assembly 10, but also an inner separator 13a thereof can be heated, thus giving full play to the bonding performance between the inner separator 13a and the anode plate 11 and the cathode plate 12, allowing the electrode assembly 10 to be better shaped during the compressing process, reducing the problems of forming the inner ring opening and the wrinkling of the separator, and improving the quality of the electrode assembly 10.

In an implementation, the separator 13 may include a first separator 131 and/or a second separator 132, the first separator 131 is located between the anode plate 11 and the cathode plate 12, the second separator 132 and the first separator 131 are located on two sides of the anode plate 11 respectively, and the first separator 131 and the second separator 132 are configured to isolate the anode plate 11 from the cathode plate 12 in the electrode assembly 10. The first separator 131 is the inner separator 13a and the second separator 132 is the outer separator 13b of the electrode assembly 10, as described previously. The heating apparatus 21 may heat only either of the first separator 131 and the second separator 132 to be wound, or may heat both the first separator 131 and the second separator 132 to be wound.

For example, only the first separator 131 may be heated using the heating method described above, that is, the first separator 131 to be wound is heated, and then the heated first separator 131, the anode plate 11, the cathode plate 12, and the second separator 132 are wound to form the electrode assembly 10; after that, the second separator 132 may be heated using other heating methods, such as heating the second separator 132 by means of a heated compressing plate during the compressing process of the electrode assembly 10, so that the number of heating apparatuses 21 is reduced and the cost is lowered. For another example, the first separator 131 and the second separator 132 may be heated simultaneously using the heating methods described above, that is, the first separator 131 and the second separator 132 to be wound are heated, and then the heated first separator 131 and the second separator 132, together with the anode plate 11 and the cathode plate 12, are wound to form the electrode assembly 10, thereby simplifying the operation and improving the preparation efficiency of the electrode assembly 10.

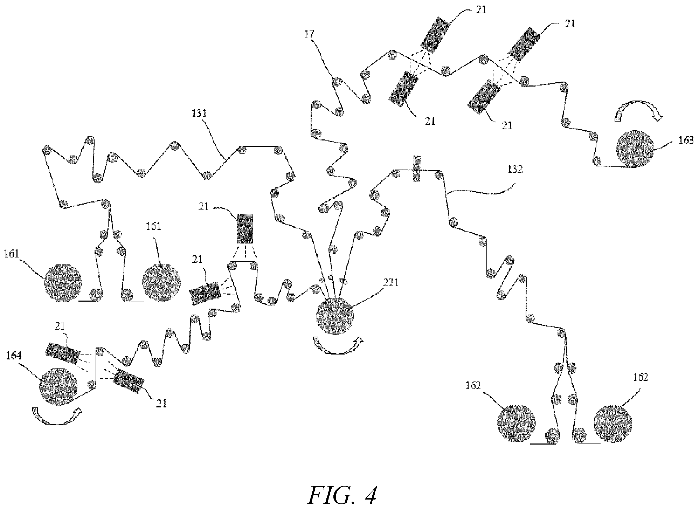

Hereinafter, the process of preparing the electrode assembly 10 is specifically described with reference to FIG. 4. As shown in FIG. 4, the apparatus 20 for preparing the electrode assembly 10 includes a heating apparatus 21 and a winding apparatus 22.

In an implementation, the heating apparatus 21 may be located on at least one side of the separator 13 to heat a surface of the at least one side of the separator 13.

In the process of heating the first separator 131 to be wound, the heating apparatus 21 may be provided on a side of the first separator 131 close to the anode plate 11 or the cathode plate 12, to heat a surface of the side of the first separator 131 close to the anode plate 11 or a surface of the side of the first separator 131 close to the cathode plate 12, so that the number of heating apparatuses 21 is reduced and the cost is lowered; alternatively, the heating apparatuses 21 may be provided on both sides of the first separator 131 to simultaneously heat surfaces of both sides of the first separator 131, thereby improving the heating efficiency.

Similarly, in the process of heating the second separator 132 to be wound, for example, the heating apparatus 21 may be provided on a side of the second separator 132 close to the anode plate 11 or the cathode plate 12, to heat a surface of the side of the second separator 132 close to the anode plate 11 or a surface of the side of the second separator 132 close to the cathode plate 12, so that the number of heating apparatuses 21 is reduced and the cost is lowered; alternatively, the heating apparatuses 21 may be provided on both sides of the second separator 132 to simultaneously heat surfaces of both sides of the second separator 132, thereby improving the heating efficiency.

As an example, simultaneous heating of both sides of the first separator 131 and both sides of the second separator 132 is illustrated in FIG. 4, and eight heating apparatuses 21 are shown as an example in FIG. 4. In practice, other numbers of heating apparatuses 21 may be provided.

As shown in FIG. 4, in an implementation, the winding apparatus 22 may include a winding shaft 221, and the winding shaft 221 is configured to wind the anode plate 11, the cathode plate 12, and the separator 13, and is easy to implement and operate. In addition, optionally, the winding apparatus 22 may further include a first unwinding roll 161, a second unwinding roll 162, a third unwinding roll 163, and a fourth unwinding roll 164 corresponding to the anode plate 11, the cathode plate 12, the first separator 131, and the second separator 132, respectively, and may further include a plurality of winding rolls 17 located in a conveying path of the anode plate 11, the cathode plate 12, the first separator 131, and the second separator 132, respectively, so as to effectively convey the anode plate 11, the cathode plate 12, the first separator 131 and the second separator 132 to the winding shaft 221.

In other implementations, there may be two first unwinding rolls 161 of the anode plate 11, after one roll of material tape is released from one of the first unwinding rolls 161, another roll of material tape may be released immediately from the other first unwinding roll 161, so that the feeding time of the anode plate 11 is saved, the intermittent time of the winding process is shortened, and the winding efficiency is improved; similarly, there may be two second unwinding rolls 162 of the cathode plate 12, after one roll of material tape is released from one of the second unwinding rolls 162, another roll of material tape is immediately released from the other second unwinding roll 162, so that the feeding time of the cathode plate 12 is saved, the intermittent time of the winding process is shortened, and the winding efficiency is improved.

As shown in FIG. 4, the winding shaft 221 may be rotated counterclockwise so as to wind the anode plate 11, the cathode plate 12, the first separator 131 and the second separator 132 simultaneously. Before the anode plate 11, the cathode plate 12, the first separator 131 and the second separator 132 are wound by means of the winding shaft 221, the heating apparatuses 21 located on both sides of the first separator 131 heat surfaces of the first separator 131 to be wound, and the heating apparatuses 21 located on both sides of the second separator 132 heat surfaces of the second separator 132 to be wound, so as to soften adhesive materials, such as PCS, on the surfaces of the first separator 131 and the second separator 132 to make full use of the bonding performance of the adhesive materials. In this way, when the heated first separator 131 and the heated second separator 132 are conveyed to the winding shaft 221, and the anode plate 11, the cathode plate 12, the first separator 131, and the second separator 132 are wound by means of the winding shaft 221, the bonding performance between the first separator 131 and the anode plate 11 and the cathode plate 12 as well as the bonding performance between the second separator 132 and the anode plate 11 are improved since the first separator 131 and the second separator 132 have been heated.

As can be seen, the heating apparatus 21 can heat not only the second separator 132 of the electrode assembly 10, but also the first separator 131, so that the bonding performance between the first separator 131 and the anode plate 11 and the cathode plate 12 can be fully utilized. In this way, when subjected to a subsequent compressing operation, the electrode assembly 10 formed by winding is more easily shaped, thus reducing the problems such as forming the inner ring opening 14 and the wrinkling of the separator, and improving the quality of the electrode assembly 10.

The heating apparatuses 21 are located between the unwinding rolls of the separator 13 and the winding shaft 221, that is, they are located in a conveying path of the first separator 131 and the second separator 132. The heating apparatuses 21 may be located anywhere in this conveying path to heat the first separator 131 and the second separator 132 in conveying. Generally, in order to improve the heating effect, the heating apparatuses 21 may, for example, be located between two neighboring winding rolls 17 that are relatively distant from each other, in order to expand the heating area.

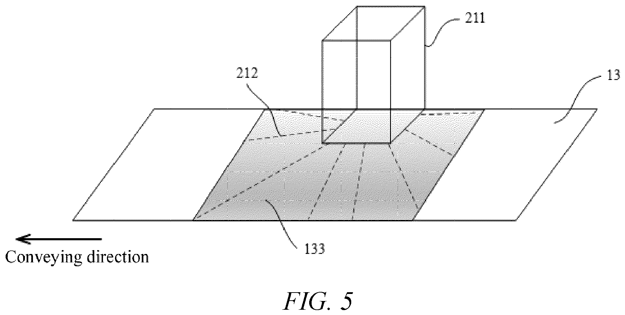

The heating apparatus 21 in the present application may be any type of heating apparatus. For example, in an implementation, as shown in FIG. 5, the heating apparatus 21 may include a transmitter 211, the transmitter 211 is configured to transmit electromagnetic waves 212 to irradiate a surface 133 of the separator 13 to be heated, and the transmitter has the advantages such as high heat production efficiency, low heat loss, and energy conservation. For example, the transmitter 211 may be an infrared transmitter, and accordingly, the electromagnetic waves 212 refer to infrared waves, such as far-infrared waves, mid-infrared waves, or near-infrared waves. In addition, in other implementations, the electromagnetic waves such as microwaves or magnetic inductive heating may also be selected to heat the separator 13.

Generally, the adhesive material on the surface of the separator 13 has an optimal softening temperature, for example, the optimal softening temperature of the PCS on the surface of the separator 13 is about 60°C. By controlling the transmit power of the electromagnetic waves 212 transmitted by the transmitter 211, and by adjusting the distance between the transmitter 211 and the surface of the separator 13, the heating temperature is allowed to lie within the range of the optimal softening temperature of the PCS.

In addition, in the heating process, due to the fact that the separator 13 is usually made of PE or PP, the heating temperature should be controlled in order to reduce the damage to the separator 13 caused by excessive heating temperature. For example, for PE or PP, the maximum temperature that it can withstand is usually no more than 120°C.

Considering that there may be fluctuation in the transmit power of the transmitter 211, which may cause that the heating temperature exceeds the maximum temperature that the separator 13 can withstand, in an implementation, the heating apparatus 21 further includes a monitoring module, and the monitoring module is configured to monitor the transmit power of the electromagnetic waves 212, thereby reducing the influence of power fluctuation on the heating process and improving the heating effect to the separator 13.

Optionally, the monitoring module controls the transmitter 211 to stop transmitting the electromagnetic waves 212 when monitoring that the transmit power exceeds a threshold value, thereby reducing damage to the separator 13 caused by excessive temperature.

Further, optionally, the monitoring module controls the winding apparatus 22 to stop winding the anode plate 11, the cathode plate 12, and the separator 13 when monitoring that the transmit power exceeds the threshold value, thereby reducing the situation of winding the separator 13 damaged by high temperature when the transmit power is too high, and improving the quality of the electrode assembly 10.

For example, the monitoring module, when monitoring that the transmit power exceeds the threshold value, may output a signal for indicating that the transmit power exceeds the threshold value, and the heating apparatus 21 and the winding apparatus 22 may suspend their respective operations according to the signal.

Optionally, the heating apparatus 21 and the winding apparatus 22 may be started simultaneously and/or stopped simultaneously. When the winding apparatus 22 is started, the heating apparatus 21 is started; when the winding apparatus 22 is stopped, the heating apparatus 21 is automatically shut down. After the heating apparatus 21 is started, the internal monitoring module thereof continuously detects the transmit power of the transmitter 211, and once it monitors that the transmit power exceeds the threshold value, the heating apparatus 21 is automatically shut down, and at the same time, the winding apparatus 22 is simultaneously stopped. Then, after the heating power of the heating apparatus 21 is calibrated and adjusted, the heating apparatus is restarted.

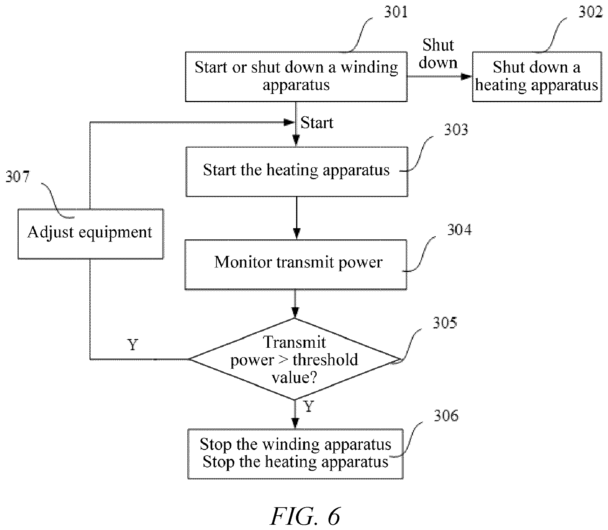

As shown in the schematic flowchart of transmit power detection shown in FIG. 6, in step 301, the winding apparatus 22 is started or shut down. When the winding apparatus 22 is shut down, step 302 is performed, i.e. the heating apparatus 21 is shut down; when the winding apparatus is started, step 303 is performed, i.e. the heating apparatus 21 is started. In step 304, the monitoring module needs to monitor the transmit power of the electromagnetic waves 212 transmitted by the heating apparatus 21. In step 305, the monitoring module determines whether this transmit power exceeds a threshold value or not. If it is determined that the transmit power exceeds the threshold value, steps 306 and 307 are performed. In step 306, both the winding apparatus 22 and the heating apparatus 21 are stopped. In step 307, the heating apparatus 21 is calibrated and adjusted, so that it is restarted after the transmit power is appropriate.

In addition, optionally, an optimal temperature range for heating may be set. The monitoring module, when detecting that the transmit power of the electromagnetic waves 212 transmitted by the transmitter 211 is out of this temperature range, the heating apparatus 21 may adjust this transmit power accordingly to make it within the temperature range.

In an implementation, the apparatus 20 for preparing an electrode assembly further includes a compressing apparatus, and the compressing apparatus is configured to apply a pressure to the electrode assembly 10 formed by winding, in order to shape the electrode assembly 10. For example, the pressure may be applied to the electrode assembly 10 along a first direction that is perpendicular to the surfaces of the anode plate 11, the cathode plate 12 and the separator 13. The separator 13 is heated in the process of winding the separator 13, the anode plate 11 and the cathode plate 12 to form the electrode assembly 10, so that not only the outer separator 13b of the electrode assembly 10, but also the inner separator 13a thereof can be heated, thus giving full play to the bonding performance between the inner separator 13a and the anode plate 11 and the cathode plate 12, allowing the electrode assembly 10 to be better shaped when the pressure is applied thereto, reducing the problems of forming the inner ring opening and the wrinkling of the separator, and improving the quality of the electrode assembly 10.

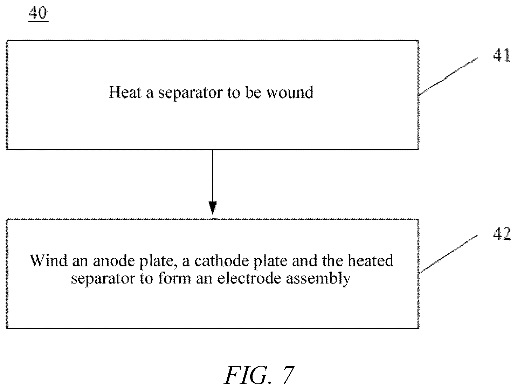

The present application further provides a method for preparing an electrode assembly. FIG. 7 is a schematic flowchart of a method for preparing an electrode assembly according to an embodiment of the present application. The method 40 for preparing an electrode assembly may be performed by the apparatus 20 described above. As shown in FIG. 7, the method 40 may include some or all of the following steps.

In step 41, a separator 13 to be wound is heated.

In step 42, an anode plate 11, a cathode plate 12, and the heated separator 13 are wound to form an electrode assembly 10.

Heating the separator 13 in the process of winding the separator 13, the anode plate 11 and the cathode plate 12 to form the electrode assembly 10 is performed, instead of heating the electrode assembly 10 after winding to form the electrode assembly 10, so that not only an outer separator 13b of the electrode assembly 10, but also an inner separator 13a thereof can be heated, thus giving full play to the bonding performance between the inner separator 13a and the anode plate 11 and the cathode plate 12, allowing the electrode assembly 10 to be better shaped during the compressing process, reducing the problems of forming the inner ring opening and the wrinkling of the separator, and improving the quality of the electrode assembly 10.

In an implementation, step 41 of heating the separator 13 to be wound includes: heating a surface of at least one side of the separator 13.

In an implementation, the separator 13 includes a first separator 131 and/or a second separator 132, the first separator 131 is located between the anode plate 11 and the cathode plate 12, the second separator 132 and the first separator 131 are located on two sides of the anode plate 11 respectively, and the first separator 131 and the second separator 132 are configured to isolate the anode plate 11 from the cathode plate 12 in the electrode assembly 10.

In an implementation, step 41 of heating the separator 13 to be wound includes: transmitting electromagnetic waves 212 to irradiate a surface of the separator 13 to be heated. For example, the electromagnetic waves 212 refer to infrared waves.

In an implementation, the method 40 further includes: monitoring transmit power of the electromagnetic waves 212.

In an implementation, the method 40 further includes: stopping transmitting the electromagnetic waves 212 when the transmit power exceeds a threshold value.

In an implementation, the method 40 further includes: stopping winding the anode plate 11, the cathode plate 12, and the separator 13 when the transmit power exceeds a threshold value.

It should be understood that the specific details of the method 40 may be referred to the preceding description for the apparatus 20, and will not be repeated herein for the sake of brevity.

It can be seen that, if the solution of preparing the electrode assembly 10 of the embodiment of the present application is used, heating the separator 13 to be wound in the process of winding the separator 13, the anode plate 11 the cathode plate 12 to form the electrode assembly 10 is performed, instead of heating the electrode assembly 10 after winding to form the electrode assembly 10, so that not only an outer separator 13b of the electrode assembly 10, but also an inner separator 13a thereof can be heated, thus giving full play to the bonding performance between the inner separator 13a and the anode plate 11 and the cathode plate 12, allowing the electrode assembly 10 to be better shaped during the compressing process, and reducing the problems of forming the inner ring opening and the wrinkling of the separator. Moreover, the power of the heating apparatus 21 is monitored in real time to reduce the influence of power fluctuation on the heating process and to improve the heating effect to the separator 13. Therefore, the electrode assembly 10 prepared based on this solution has good quality.

Those of ordinary skills in the art may be aware that the units and algorithm steps of various examples described in conjunction with the embodiments disclosed herein can be implemented in electronic hardware or a combination of computer software and electronic hardware. Whether these functions are performed in hardware or software depends on the specific applications and design constraints of the technical solutions. A person skilled in the art may use different methods for each specific application to implement the described functions, but such implementation should not be considered to be beyond the scope of the present application.

It can be clearly understood by those skilled in the art that, for convenience and brevity of description, for the specific operation processes of the systems, apparatuses and units described above, reference may be made to the corresponding processes in the foregoing method embodiments, and details are not described herein again.

In some embodiments provided in the present application, it should be understood that the disclosed systems, apparatuses and methods may be implemented in other ways. For example, the apparatus embodiments described above are merely illustrative. For example, the division of units is merely a logical functional division, and in actual implementations, there may be other division methods. For example, a plurality of units or components may be combined or integrated into another system, or some features may be omitted or not implemented. In addition, the mutual couplings or direct couplings or communicative connections shown or discussed may be indirect couplings or communicative connections via some interfaces, apparatuses or units, and may be electrical, mechanical or in other forms.

The units described as separate parts may or may not be physically separated, and parts displayed as units may or may not be physical units, that is, they may be located in one position, or may be distributed on a plurality of network units. Some or all of the units may be selected according to actual requirements to achieve the objectives of the solutions of the embodiments.

## Claims

1. An apparatus for preparing an electrode assembly, comprising:
a heating apparatus configured to heat a separator configured to be wound; and
a winding apparatus configured to wind an anode plate, a cathode plate and the heated separator to form an electrode assembly.

2. The apparatus according to claim 1, wherein the heating apparatus is located on at least one side of the separator to heat a surface of the at least one side of the separator.

3. The apparatus according to claim 1 or 2, wherein the separator comprises a first separator and/or a second separator, the first separator is located between the anode plate and the cathode plate, the second separator and the first separator are located on two sides of the anode plate respectively, and the first separator and the second separator are configured to isolate the anode plate from the cathode plate in the electrode assembly.

4. The apparatus according to claim 1 or 2 or 3, wherein the heating apparatus comprises a transmitter, and the transmitter is configured to transmit electromagnetic waves to irradiate a surface of the separator to be heated.

5. The apparatus according to claim 4, wherein the electromagnetic waves refer to infrared waves.

6. The apparatus according to claim 4 or 5, wherein the heating apparatus further comprises a monitoring module, and the monitoring module is configured to monitor transmit power of the electromagnetic waves.

7. The apparatus according to claim 6, wherein the monitoring module is further configured to control the transmitter to stop transmitting the electromagnetic waves when monitoring that the transmit power exceeds a threshold value.

8. The apparatus according to claim 6 or 7, wherein the monitoring module is further configured to control the winding apparatus to stop winding the anode plate, the cathode plate, and the separator when monitoring that the power exceeds a threshold value.

9. The apparatus according to any one of claims 1-8, wherein the winding apparatus comprises a winding shaft, and the winding shaft is configured to wind the anode plate, the cathode plate, and the separator.

10. A method for preparing an electrode assembly, comprising:
heating a separator configured to be wound; and
winding an anode plate, a cathode plate, and the heated separator to form an electrode assembly.

11. The method according to claim 10, wherein heating a separator configured to be wound comprises:
heating a surface of at least one side of the separator.

12. The method according to claim 10 or 11, wherein the separator comprises a first separator and/or a second separator, the first separator is located between the anode plate and the cathode plate, the second separator and the first separator are located on two sides of the anode plate respectively, and the first separator and the second separator are configured to isolate the anode plate from the cathode plate in the electrode assembly.

13. The method according to any one of claims 10-12, wherein heating a separator configured to be wound comprises:
transmitting electromagnetic waves to irradiate a surface of the separator to be heated.

14. The method according to claim 13, wherein the electromagnetic waves refer to infrared waves.

15. The method according to claim 13 or 14, wherein the method further comprises:
monitoring transmit power of the electromagnetic waves.

16. The method according to claim 15, wherein the method further comprises:
stopping transmitting the electromagnetic waves when the transmit power exceeds a threshold value.

17. The method according to claim 15 or 16, wherein the method further comprises:
stopping winding the anode plate, the cathode plate, and the separator when the transmit power exceeds a threshold value.
